(19) Europäisches Patentamt
European Patent Office
Office européen des brevets

(11) Publication number: 0 171 661 B1

(12) **EUROPEAN PATENT SPECIFICATION**

(45) Date of publication of patent specification: 29.03.89

(51) Int. Cl.⁴: C 08 F 8/30, C 08 F 8/44, C 02 F 1/56

(21) Application number: 85109169.4

(22) Date of filing: 22.07.85

(54) **Method of preparing cationic terpolymers and product derived therefrom.**

(30) Priority: 13.08.84 US 640262
12.07.85 US 753557

(43) Date of publication of application:
19.02.86 Bulletin 86/08

(45) Publication of the grant of the patent:
29.03.89 Bulletin 89/13

(84) Designated Contracting States:
AT BE CH DE FR GB IT LI LU NL SE

(56) References cited:
EP-A-0 043 121
US-A-3 582 511
US-A-3 730 888
US-A-4 390 659

**The file contains technical information submitted after the application was filed and not included in this specification**

(73) Proprietor: ALLIED-SIGNAL INC.
Columbia Road and Park Avenue P.O. Box 2245R
Morristown New Jersey 07960 (US)

(72) Inventor: Reimschuessel, Herbert Kurt
c/o Allied Corporation P.O. Box 2245R
Morristown, NJ 07960 (US)

(74) Representative: Brock, Peter William
Urquhart-Dykes & Lord 91 Wimpole Street
GB-London W1M 8AH (GB)

Note: Within nine months from the publication of the mention of the grant of the European patent, any person may give notice to the European Patent Office of opposition to the European patent granted. Notice of opposition shall be filed in a written reasoned statement. It shall not be deemed to have been filed until the opposition fee has been paid. (Art. 99(1) European patent convention).

Courier Press, Leamington Spa, England.

EP 0 171 661 B1

**Description**

This invention relates to high molecular weight soluble terpolymers derived from ethylenically unsaturated monomers with pendent amino groups, carboxy groups and ester groups containing a 2-hydroxypropyl-trimethylammoniumchloride moiety, that are useful as flocculants of high efficacy. These terpolymers may be prepared by reaction between glycidyltrimethylammoniumchloride and copolymers of acrylamide and acrylic acid.

Polymers containing the 2-hydroxypropyltrialkylammonium chloride unit are known. They are typically prepared, for example as described in US—A—3428617 by polymerization and copolymerization of monomers of the type of 2-hydroxy-3-acryloxypropyltrimethylammoniumchloride and, in the case of copolymerization, with various vinyl type monomers. These polymers are used as retention aids in paper manufacturing, as flocculating agents and for the treatment of fibrous materials.

It is also known that polymers derived from ethylenically unsaturated carboxylic acids and characterized by the presence of quaternary ammonium groups are flocculant agents and are effective in the dewatering of aqueous suspensions. Polymers of this type are described in US—A—3023162 and are derived by direct polymerization of aminoalkylesters of acrylic acids containing basic tertiary amino groups, their salts or quaternary structures. In order to be effective as flocculant, however, at least 45% of the tertiary amine groups of the polymer must converted into quaternary ammonium groups by means of a $C_2$ or $C_3$ alkylene oxide.

Further, US—A—3730888 discloses flocculants obtained by reaction between a glycidyl tertiary amine and a polymer containing carboxyl groups, where the latter are derived from an ethylenically unsaturated carboxylic acid. According to the disclosure of this patent, the glycidyl tertiary amine is used either as the free base or in salt form, and the substituents on the nitrogen atom must contain from 2 to 6 carbon atoms. The polymers are used as papermaking aids.

In essence this prior art indicates that:

1. polymers containing 2-hydroxypropyltrimethylammonium chloride moieties can be obtained by polymerization of 2-hydroxy-3-acrylyloxypropyltrimethylammonium chloride.

2. polymers derived from ethylenically unsaturated tertiary aminoalkylesters are flocculant agents if more than about 45% of the tertiary amino groups have been converted to quaternary ammonium groups.

3. polymers containing carboxyl groups are capable of reacting via these groups with glycidyl tertiary amines. These polymers are indicated to be effective as flocculants if the substituents on the nitrogen contain from 2 to 6 carbon atoms.

None of the known prior art discloses that polymers containing quaternary ammonium groups in addition to carboxyl groups or carboxylate groups are effective flocculants. We have found that a need exists for improved flocculants, derived from acrylamide-acrylic acid copolymers, which are effective when they contain amounts as little as 4% to 7% of chain segments containing the 2-hydroxylpropyl-trimethylammonium chloride moiety. Copolymers containing this moiety may be obtained by polymerization of acrylamide in the presence of 2-hydroxy-3-acrylyloxypropyltrimethylammonium chloride or, more advantageously, by reaction of an acrylamide-acrylic acid copolymer with glycidyltrimethylammonium chloride. The reaction can be conducted in an heterogeneous system entailing the solid copolymer and a solution of the glycidyltrimethylammonium chloride. The discovery of this particular reaction is significant because it constitutes a convenient method for introducing a high concentration of charged centers into a high molecular weight polymer and yields an essentially "solid" reaction product which appears to dissolve more readily than the starting copolymer.

This invention provides a terpolymer composition having the general chemical structure:

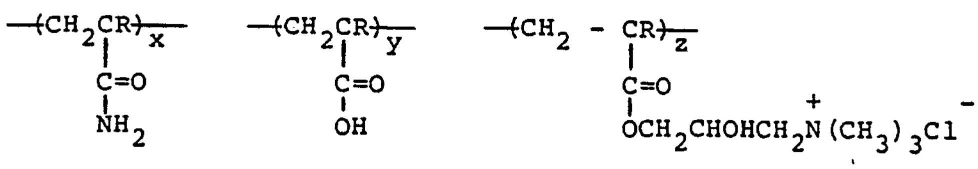

wherein R is hydrogen or methyl x, y and z represent the molecular fractional proportions and x has a value of from 0.1 to 0.9; y has a value of 0 to 0.8; and z has a value of 0.1 to 0.9. Preferably x is 0.55 to 0.75; y is 0.05 to 0.25 and z is 0.1 to 0.5 and more preferably x is 0.20 to 0.80 y is 0 to 0.40, and z is 0.20 to 0.80.

This invention also provides a method of preparing a composition as defined above wherein an acrylamide polymer selected from (meth)acrylamide homopolymers, and meth(acrylamide)/(meth)acrylic acid copolymers is pre-swollen, a concentrated solution of glycidyltrialkylammoniumchloride is added thereto, and continuous mixing is carried out until the glycidyl solution is absorbed by the swollen acrylamide polymer.

According to various embodiments the acrylamide polymer is:

(a) a copolymer of acrylamide or methacrylamide with acrylic acid,

(b) a copolymer of acrylamide or methacrylamide and methacrylic acid,

(c) a copolymer of acrylamide or methacrylamide and an alkali metal (preferably sodium) salt of acrylic acid or methacrylic acid.

The acrylamide polymer can, for instance, be prepared by hydrolyzing polyacrylamide until a proportion of its amido groups are converted into carboxy groups, or by hydrolyzing polyacrylonitrile until all its cyano groups are converted into amido or carboxy groups.

The figure of the drawing illustrates the relative efficiency of the polymeric composition of the invention ($P_1$ and $P_2$) through their specific filtration resistance (SFR) compared to a commercial flocculant (CF).

We have discovered that quaternary ammonium groups such as the one present in the 2-hydroxypropyltrimethylammonium chloride can be introduced into carboxy group-containing polymers by reaction between such polymers and glycidyltrimethylammoniumchloride. Although this reaction appears to proceed without any added catalyst, we have found that the presence of 3-chloro-2-hydroxypropyltrimethylammoniumchloride is effective in catalyzing the reaction.

We have also found that, in the case of the quaternary ammonium groups, there is no need for each of the nitrogen sustituents to have more than one carbon atom in order to be effective flocculants. Also, quite surprisingly, we have found that high flocculant efficacy was observed for compositions that contained considerably less than 45% of moieties with quaternary ammonium groups, and that excellent performance is obtained with compositions derived from acrylamideacrylic acid copolymers that contained as little as 4—7% of chain segments containing the 2-hydroxypropyltrimethylammoniumchloride moiety, which in all probability may be connected to the polymer backbone via an ester linkage. Since, in addition to this unit, the polymer contains both segments having attached an amido group and segments with a carboxylic acid group, the polymers of this invention are terpolymers.

The acrylamide-acrylic acid copolymers may be obtained by any known process such as mentioned for instance in Kirk-Othmer Encyl. of Chem. Technology, Vol. 10, p. 506 entailing either copolymerization of the corresponding monomers on controlled hydrolysis of either polyacrylamide or polyacrylonitrile. The terpolymer formation may be achieved either by reaction between such copolymers and glycidyltrimethylammoniumchloride, or by conducting the polymerization of the comonomer mixture in the presence of glycidyltrimethylammoniumchloride at conditions at which reaction between this chloride and carboxyl groups occurs.

Alternatively, the terpolymers may also be obtained by reaction between 3-chloro-2-hydroxypropyltrimethylammoniumchloride and copolymers of acrylamide and the alkali metal salts of acrylic acid such as sodium acrylate.

While the reaction in accordance with the invention may be conducted with the polymer in solution, we have discovered that significant advantages are present in conducting the reaction of the polymer with the glycidyl trimethylammoniumchloride, while the polymer is substantially either in the solid phase or in a gelled state.

The advantage of conducting the reaction in the solid or gel phase is particularly notable with high molecular weight polymers wherein amounts of only about 2 percent are tolerable in solution because of the high viscosity of solutions having larger amounts. With such systems, the large amount of water which must be handled oftentimes introduce severe practical problems. Additionally, because of the large amount of solvent (water) in the system, the efficiency of the glycidyltrimethylammoniumchloride suffers i.e. relatively inordinate amounts to effect a suitable reaction.

More particularly, in conducting the reaction in the solid phase, the polymer is preferably pretreated by swelling as with a small amount of water, or a suitable swelling agent such as an alcohol or dimethylsulfoxide (DMSO); subsequently, a concentrated solution either of glycidyltrimethylammoniumchloride, or, in case of a polymer containing carboxylate units such as derived from sodium acrylate, of 3-chloro-2-hydroxypropyltrimethylammonium chloride is added and mixed therewith to yield the desired reaction product. This operation may also be conducted in the presence of an inert organic liquid, such as an alkane, kerosene, dipentene, terpenes, chlorobenzene, trichloroethane, etc., which may function as a dispersing and heat transfer medium. The reaction proceeds effectively and yields substantially uniform products with minimum amounts of reactants to handle.

The invention will be further described by the following specific examples. Example 1 describes the preparation of an intermediate that can be used to prepare terpolymers according to the invention.

### Example 1

Formation of a copolymer of acrylamide and acrylic acid by hydrolysis of polyacrylamide.

3000g of 2% aqueous solution of polyacrylamide was mixed with 900g of a 35% aqueous NaOH solution and stirred for 24 hours at room temperature. After this time the polymer was precipitated into 15% hydrochloric acid, filtered, washed with diluted HCl, extracted with methanol, and dried. The material contained 6.36%N which corresponds to 9.4 meq. COOH/g.

### Example 2

Terpolymer formation by reaction with glycidyl trimethylammonium chloride.

5g of the copolymer of Example 1 was dissolved in 125g of water at 70°C. To this solution was added 42g of a solution prepared by dissolving 13.85g of glycidyltrimethylammoniumchloride in 28g of water

followed by addition of 0.41g of 37% HCl, and allowing to react for 2 hours before adding to the polymer solution.

About 2 hours after mixing the two solutions the viscosity of the mixture had increased, stirring was continued for about 20 hours, then 150g of water was added. After cooling to room temperature the polymer was precipitated into methanol, filtered, extracted with methanol, and dried. The recovered polymer (P1) contained 7.07% N and 3.1% Cl.

Based upon these analytical data, the composition of the terpolymer is represented by the general chemical Structure I

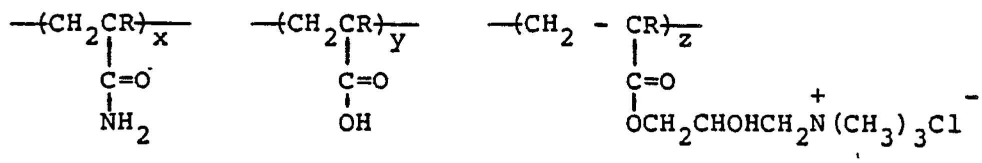

wherein x, y and z have the following values: x = 0.345; y = 0.582; and z = 0.072.

Example 3

Terpolymer formation. The procedure employed in Example 2 was followed except that no HCl was added to the glycidyltrimethylammoniumchloride solution. (Addition of HCl in Example 2 had resulted in the formation of catalytic amounts of 3-chloro-2-hydroxypropyltrimethylammoniumchloride). The resulting polymer (P2) contained 7.3%N and 1.75% Cl which corresponds to Structure I shown in Example 2 with the following composition proportions:

x = 0.366
y = 0.596
z = 0.038

Example 4

Diluted aqueous solutions of the polymers of Examples 2 and 3 were used for the treatment of samples of municipal sludges and were found effective in dewatering such sludges. The efficacy is reflected in the values of the specific filtration resistance (SFR) and the dependence of these values on polymer dosage. Results of SFR tests are shown in Figure 1 with values of a conventional commercial flocculant (CF). The values for polymers P1 and P2 exhibit not only considerably lower resistance to filtration but indicate also less sensitivity with respect to polymer dosage.

Example 5

9g of an acrylamide-acrylic acid copolymer containing 12.64% of nitrogene (5 meq COOH/g) were dispersed in 270g methanol containing 18g of DMSO. The methanol was then recovered by distillation at atmospheric pressure. The polymer residue was then redispersed in a solution prepared by dissolving 14.0g of glycidyltrimethylammoniumchloride (epoxide equivalent = 6.4 meq/g) in 250g of methanol. After removal of the methanol under reduced pressure at 25°C the remaining solid mixture was heated to 65°C for 20 hours. After that time it was extracted with isopropanol and dried in vacuum. The polymeric reaction product contained 48.1% carbon, 10.54% nitrogen, 8.59% chlorine. This composition corresponds according to the structure I to the following values x = 0.601, y = 0.1146, z = 0.285.

Example 6

The procedure employed was the same as that used in Example 5 except that the polymer-glycidyltrimethylammoniumchloride mixture obtained after the removal of the methanol was heated to 65°C for 20 hours as a suspension in 270g of n-hexane. The polymeric reaction product contained 48.1% carbon, 11.03% nitrogen, and 8.24% chlorine. This means that x = 0.637, y = 0.096, and z = 0.267.

**Claims**

1. A terpolymer composition characterised by the general chemical structure:

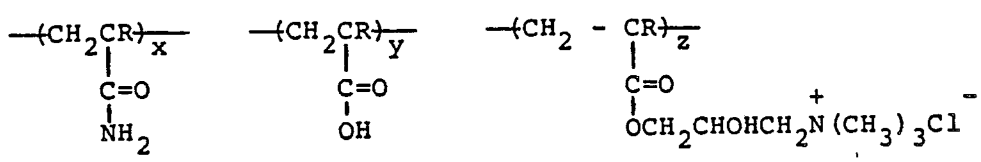

wherein R is hydrogen or methyl x, y and z represent the molecular fractional proportions and x has a value of from 0.1 to 0.9; y has a value of 0 to 0.8; and z has a value of 0.1 to 0.9.

2. A composition according to claim 1 characterized in that x is 0.55 to 0.75; y is 0.05 to 0.25 and z is 0.1 to 0.5.

3. A composition according to claim 1 characterized in that x is 0.20 to 0.80, y is 0 to 0.40, and z is 0.20 to 0.80.

4. A method of preparing a composition according to any one of claims 1 to 3 characterized in that an acrylamide polymer selected from (meth)acrylamide homopolymers, and meth(acrylamide)/(meth)acrylic acid copolymers is pre-swollen, glycidyltrialkylammoniumchloride is added thereto, and continuous mixing is carried out until the glycidyl solution is adsorbed by the swollen acrylamide polymer.

5. A method according to claim 4 characterized in that the acrylamide polymer is a copolymer of acrylamide or methacrylamide with acrylic acid.

6. A method according to claim 4 characterized in that the acrylamide polymer is a copolymer of acrylamide or methacrylamide and methacrylic acid.

7. A method according to claim 4 characterized in that the acrylamide polymer is a copolymer of acrylamide or methacrylamide and an alkali metal salt of acrylic acid or methacrylic acid.

8. A method according to claim 7 characterized in that the alkali metal salt is a sodium salt.

9. A method according to claim 4 characterized in that the acrylamide polymer is prepared by hydrolyzing polyacrylamide until a proportion of its amido groups are converted into carboxy groups.

10. A method according to claim 4 characterized in that the acrylamide polymer is prepared by hydrolyzing polyacrylonitrile until all its cyano groups are converted into amido or carboxy groups.

**Patentansprüche**

1. Eine Terpolymerzusammensetzung, gekennzeichnet durch die allgemeine chemische Strukur:

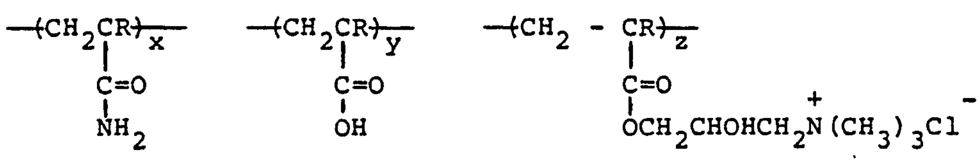

in der R Wasserstoff oder Methyl ist, x, y und z die Molanteile darstellen und x einen Wert von 0,1 bis 0.9; y einen Wert von 0 bis 0,8 und z einen Wert von 0,1 bis 0,9 hat.

2. Zusammensetzung nach Anspruch 1, dadurch gekennzeichnet, daß x zwischen 0,55 und 0,75; y zwischen 0,05 und 0,25 und z zwischen 0,1 und 0,5 liegt.

3. Zusammensetzung nach Anspruch 1, dadurch gekennzeichnet, daß x zwischen 0,20 und 0,80; y zwischen 0 und 0,40 und z zwischen 0,20 und 0,80 liegt.

4. Verfahren zur Herstellung einer Zusammensetzung entsprechend einem der Ansprüche 1 bis 3, dadurch gekennzeichnet, daß ein Acrylamidpolymer, ausgewählt aus den (meth)-Acrylamidhomopolymeren and meth(Acrylamid)/(meth)Acrylsäurecopolymeren vorgequollen wird, das Glycidyltrialkylammoniumchlorid zugeführt wird und kontinuierlich gemischt wird, bis die Glycidyllösung vom gequollenen Acrylamidpolymer adsorbiert ist.

5. Verfahren nach Anspruch 4, dadurch gekennzeichnet, daß das Acrylamidpolymer ein Copolymer von Acrylamid oder Methacrylamid mit Acrylsäure ist.

6. Verfahren nach Anspruch 4, dadurch gekennzeichnet, daß das Acrylamidpolymer ein Copolymer von Acrylamid oder Methacrylamid mit Methacrylsäure ist.

7. Verfahren nach Anspruch 4, dadurch gekennzeichnet, daß das Acrylamidpolymer ein Copolymer von Acrylamid oder Methacrylamid und einem Alkalisalz der Acrylsäure oder Methacrylsäure ist.

8. Verfahren nach Anspruch 7, dadurch gekennzeichnet, daß das Alkalimetallsalz ein Natriumsalz ist.

9. Verfahren nach Anspruch 4, dadurch gekennzeichnet, daß das Acrylamidpolymer durch das Hydrolisieren von Copolyacrylamid hergestellt wird, bis ein Teil ihrer Amidgruppen in Carboxygruppen umgewandelt ist.

10. Verfahren nach Anspruch 4, dadurch gekennzeichnet, daß das Acrylamidpolymer durch Hydrolisieren von Polyacrylonitril hergestellt wird, bis alle Cyanogruppen in Amido- oder Carboxygruppen umgewandelt sind.

**Revendications**

1. Composition de terpolymere, caractérisée par la structure chimique générale:

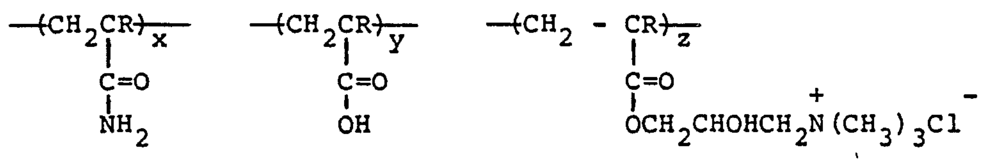

dans laquelle R représente l'hydrogène ou un radical méthyle, x, y et z représentent les proportions fractionnaires moléculaires et x est compris entre 0,1 et 0,9; y est compris entre 0 et 0,8; et z est compris entre 0,1 et 0,9.

2. Composition selon la revendication 1, caractérisée en ce que x est compris entre 0,55 et 0,75; y est compris entre 0,05 et 0,25 et z est compris entre 0,1 et 0,5.

3. Composition selon la revendication 1, caractérisée en ce que x est compris entre 0,20 et 0,80; y est compris entre 0 et 0,40 et z est compris entre 0,20 et 0,80.

4. Procédé de préparation d'une composition selon l'une quelconque des revendications 1 à 3, caractérisé en ce que l'on fait subir un pré-gonflement à un polymère d'acrylamide choisi parmi des homopolymères de (méth)acrylamide, et des copolymères (méth)acrylamide/acide(méth)acrylique, en des copolymères (méth)acrylamide/acide(méth)acrylique, en ce qu'on lui ajoute du chlorure de glycidyltrialkylammonium et en ce qu'on mélange continuellement jusqu'à ce que la solution glycidylique soit absorbée par le polymère d'acrylamide gonflé.

5. Procédé selon la revendication 4, caractérisé en ce que le polymère d'acrylamide est un copolymère d'acrylamide ou de méthacrylamide et d'acide acrylique.

6. Procédé selon la revendication 4, caractérisé en ce que le polymère d'acrylamide est un copolymère d'acrylamide ou de méthacrylamide et d'acide méthacrylique.

7. Procédé selon la revendication 4, caractérisé en ce que le polymère d'acrylamide est un copolymère d'acrylamide ou de méthacrylamide et d'un sel de métal alcalin d'acide acrylique ou d'acide méthacrylique.

8. Procédé selon la revendication 7, caractérisé en ce que le sel de métal alcalin est un sel de sodium.

9. Procédé selon la revendication 4, caractérisé en ce que l'on prépare le polymère d'acrylamide par hydrolyse de polyacrylamide jusqu'à ceu'une proportion de ses groupes amido soit transformée en groupes carboxy.

10. Procédé selon la revendication 4, caractérisé en ce que l'on prépare le polymère d'acrylamide par hydrolyse de polyacrylonitrile jusqu'à ce que tous ses groupes cyano soient transformés en groupes amido ou carboxy.

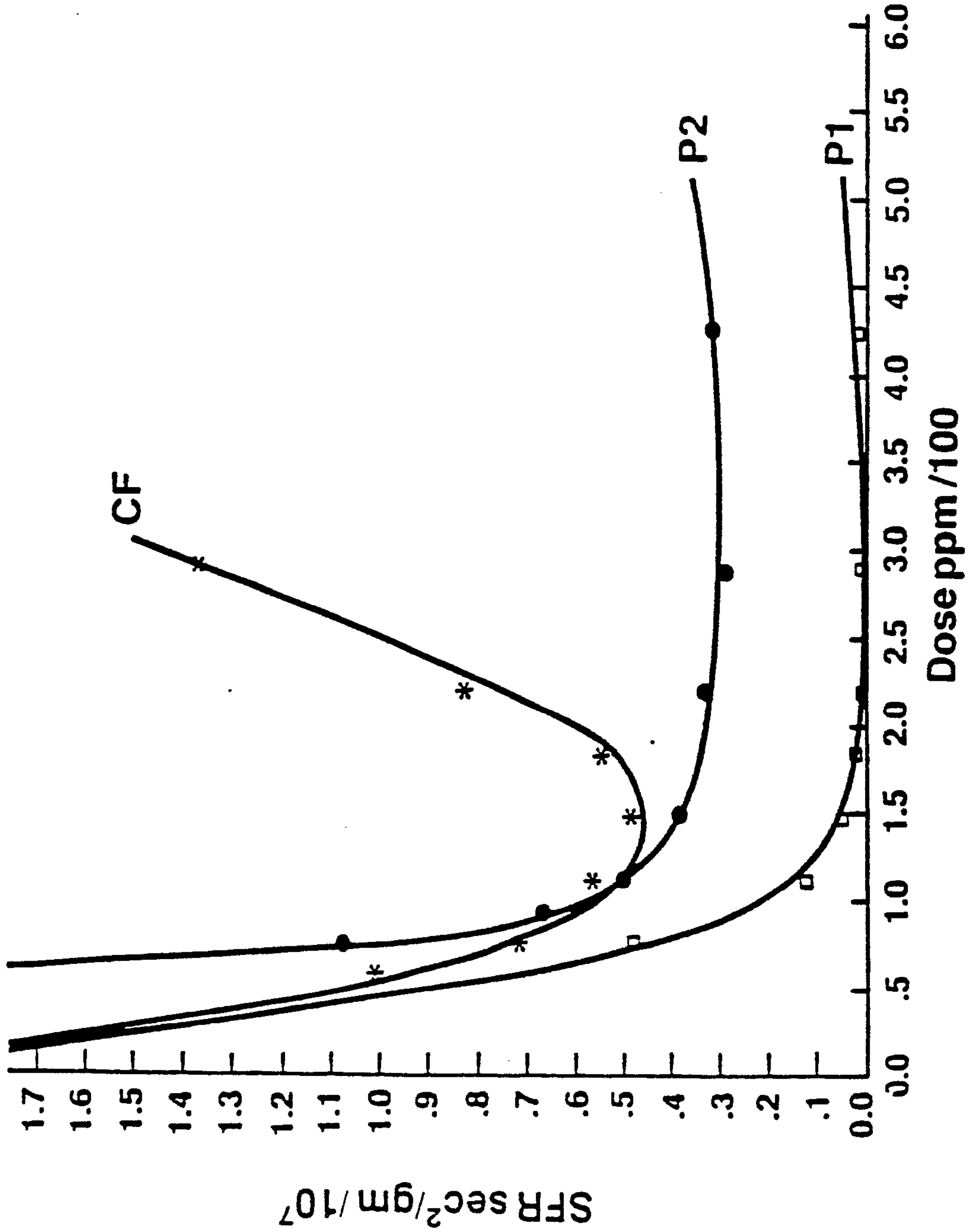
CF
P2
P1
Dose ppm/100
SFR sec$^2$/gm/$10^7$
0.0 .5 1.0 1.5 2.0 2.5 3.0 3.5 4.0 4.5 5.0 5.5 6.0
0.0 .1 .2 .3 .4 .5 .6 .7 .8 .9 1.0 1.1 1.2 1.3 1.4 1.5 1.6 1.7